# EUROPÄISCHE PATENTSCHRIFT

(11) **EP 1 660 924 B1**
(45) Veröffentlichungstag und Bekanntmachung des Hinweises auf die Patenterteilung: **01.10.2014**
(21) Anmeldenummer: 04766574.0
(22) Anmeldetag: 23.08.2004
(51) Int. Cl.: G02B 21/00

(54) **RASTERMIKROSKOP**
RASTER MICROSCOPE
MICROSCOPE A BALAYAGE

(30) Priorität: 05.09.2003 DE 10340965
(43) Veröffentlichungstag der Anmeldung: 31.05.2006
(73) Patentinhaber: Leica Microsystems CMS GmbH, 35578 Wetzlar (DE)
(72) Erfinder: GUGEL, Hilmar, 69221 Dossenheim (DE)
(74) Vertreter: Landskron, Jürgen
(86) Internationale Anmeldenummer: PCT/EP2004/051877
(87) Internationale Veröffentlichungsnummer: WO 2005/024486

(56) Entgegenhaltungen:
- WO-A-98/28646
- DE-A- 10 105 391
- US-A- 3 437 395
- US-A- 5 731 588
- US-A1- 2002 109 913
- M. DYBA, S.W. HELL: "Focal Spots of Size Lamda/23 Open Far-Field Fluorescence Microscopy at 33nm Axial Resolution" PHYSICAL REVIEW LETTERS, Bd. 88, Nr. 16, 22. April 2002 (2002-04-22), Seiten 163901-1-163901-4, XP002305573 in der Anmeldung erwähnt
- T.A. KLAR, E. ENGEL, S. W. HELL: "Breaking Abbe's diffraction resolution limit in fluorescence microscopy with stimulated emission depletion beams of vrious shapes" PHYSICAL REVIEW E, Bd. 64, Nr. 066613, 26. November 2001 (2001-11-26), Seiten 066613-1-066613.9, XP002305574 in der Anmeldung erwähnt

## Beschreibung

Die Erfindung betrifft ein Rastermikroskop mit einem Anregungslichtstrahl zum optischen Anregen eines ersten Probenbereichs, mit einem Stimulationslichtstrahl zum Auslösen einer stimulierten Emission oder einer weiteren Anregung in einem weiteren, zumindest teilweise mit dem ersten Probenbereich überlappenden Probenbereich, mit zumindest einem Objektiv zum Fokussieren des Anregungslichtstrahls und des Stimulationslichtstrahls und mit einem optischen Bauteil zur Beeinflussung der Form des Fokus des Anregungslichtstrahls und/oder des Stimulationslichtstrahls.

In der Rastermikroskopie (Scanmikroskopie) wird eine Probe mit einem Lichtstrahl beleuchtet, um das von der Probe emittierte Reflexions- oder Fluoreszenzlicht zu beobachten. Der Fokus des Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x- und der andere in y-Richtung ablenkt. Die Verkippung der Spiegel wird beispielsweise mit Hilfe von Galvanometer-Stellelementen bewerkstelligt. Die Leistung des vom Objekt kommenden Lichts wird in Abhängigkeit von der Position des Abtaststrahles gemessen. Üblicherweise werden die Stellelemente mit Sensoren zur Ermittlung der aktuellen Spiegelstellung ausgerüstet. Neben diesen sogenannten strahlscannenden Methoden sind auch Scanmikroskope mit räumlich feststehendem Beleuchtungslichtstrahl bekannt, bei denen die Probe zur Abtastung mit Hilfe eines Feinpositioniertisches verfahren wird. Diese Scanmikroskope werden objektscannend genannt.

Speziell in der konfokalen Rastermikroskopie wird ein Objekt mit dem Fokus eines Lichtstrahles in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Deteküonsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt. Meist wird ein dreidimensionales Bild durch schichtweise Bilddatenaufnahme erzielt.

Eine Anordnung zur Steigerung des Auflösungsvermögens für Fluoreszenzanwendungen ist aus der DE 44 16 558 bekannt. Hierbei werden die lateralen Randbereiche des Fokusvolumens des Anregungslichtstrahls mit einem Lichtstrahl einer anderen Wellenlänge, dem sog. Stimulationslichtstrahl, der von einem zweiten Laser emittiert wird, beleuchtet, um dort die vom Licht des ersten Lasers angeregten Probenbereiche stimuliert in den Grundzustand zurück zu bringen. Detektiert wird dann nur das spontan emittierte Licht aus den nicht vom zweiten Laser beleuchteten Bereichen, so dass insgesamt eine Auflösungsverbesserung erreicht wird. Für dieses Verfahren hat sich die Bezeichnung STED (Stimulated Emission Depletion) eingebürgert.

Beispielsweise aus US 2002/0167724 A1 oder aus US 6,667,830 B1 ist eine Variante der STED-Technik bekannt, bei der die vom Licht des ersten Lasers angeregten Probenbereiche mit dem Licht des zweiten Lasers zunächst weiter - nämlich in einen dritten Zustand - angeregt werden. Bei dieser Variante, für die sich auch der Begriff "up-conversion" eingebürgert hat, wird äquivalent zu der Variante der direkten stimulierten Abregung in den Grundzustand eine Auflösungssteigerung erzielt.

Aus DE 100 12 462 A1 ist eine Vorrichtung zur Beleuchtung eines Objekts vorzugsweise bei der konfokalen Fluoreszenzrastermikroskopie mit einem Beleuchtungsstrahlengang einer Lichtquelle und mindestens einem weiteren Beleuchtungsstrahlengang einer weiteren Lichtquelle, wobei die Beleuchtungsstrahlengänge zumindest teilweise einander überlagerbar sind, bekannt. Die Vorrichtung ist zur Vereinfachung der Justierung sowie zur Reduktion der optischen Bauteile im Beleuchtungsstrahlengang dadurch gekennzeichnet, dass mindestens in einem der Beleuchtungsstrahlengänge mindestens ein optisches Bauteil angeordnet ist, wobei die optischen Eigenschaften des Bauteils derart beeinflussbar bzw. veränderbar sind, dass sich das Beleuchtungsmuster des Beleuchtungsstrahlengangs im Objektbereich in seiner Form verändert. Das optische Bauteil kann hierbei beispielsweise als runde Phasenverzögerungsplatte, die in ihrem Durchmesser kleiner als der Strahldurchmesser ist und folglich überleuchtet wird, ausgebildet sein. Als Phasenverzögerungsplatte wird ein optisches Bauteil bezeichnet, das eine ortsabhängige Phasenverzögerung des die Phasenverzögerungsplatte durchtretenden Lichts bewirkt. Die Phasenverzögerungsplatte ist im Strahlengang des eine stimulierte Emission auslösenden Beleuchtungsstrahls angeordnet und erzeugt bei geeigneter Struktur einen hohlen Fokus, der eine Auflösungsverbesserung sowohl lateral als auch axial ermöglicht. Eine bevorzugte Ausgestaltung einer Phasenverzögerungsplatte besteht aus einem Substrat, auf das lokal in bestimmten Bereichen eine oder mehrere Schichten eines phasenverzögernd wirkenden Materials (beispielsweise MgF₂) aufgebracht sind. Sind die Dicken der Schichten und die Größen der Schichtbereiche so gewählt, dass die Hälfte der gesamten Lichtamplitude in der Pupille der Mikroskopoptik eine Phasenverzögerung von λ/2 gegenüber der anderen Hälfte der Lichtamplitude besitzt, dann erzeugt die fokussierte Wellenfront im Fokus der Mikroskopoptik (Objektiv) destruktive Interferenz. Die resultierende PSF (Point Spread Function) besitzt somit ein Minimum der Fokusmitte.

Die Verwendung von Phasenverzögerungsplatten in der STED-Mikroskopie wird beispielsweise auch in den folgenden Veröffentlichungen erwähnt: Proc. Natl. Acad. Sci. U.S.A., Vol. 97, p. 8206-8210, 2000; Appl. Phys. Lett., Vol. 82, No. 18, p. 3125-3127, 2003; Phys. Rev. Lett., Vol. 88, p. 163901-1 - 163901-4, 2002; Phys. Rev. E, Vol.64, p. 066613-1 - 066613-9, 2001.

Anstelle von herkömmlichen Phasenverzögerungsplatten können auch LCDs oder programmierbare Lichtmodulatoren verwendet werden.

Eine Auflösungssteigerung in Richtung der optischen Achse lässt sich, wie in der Europäischen Patentschrift EP 0 491 289 mit dem Titel: "Doppelkonfokales Rastermikroskop" beschrieben ist, durch eine Doppelobjektivanordnung (4Pi-Anordnung) erreichen. Das vom Beleuchtungssystem kommende Anregungslicht wird in zwei Teilstrahlen aufgespalten, die die Probe einander entgegenlaufend durch zwei spiegelsymmetrisch angeordnete Objektive gleichzeitig beleuchten. Die beiden Objektive sind auf verschiedenen Seiten der ihnen gemeinsamen Objektebene angeordnet. Im Objektpunkt bildet sich durch diese interferometrische Beleuchtung ein Interferenzmuster aus, das bei konstruktiver Interferenz ein Hauptmaximum und mehrere Nebenmaxima aufweist. Interferiert nur das Licht der Anregung, spricht man von 4Pi-Mikroskopie des Typs A, bei gleichzeitiger Interferenz des Detektionslichts von Typ C. Mit diesem doppelkonfokalen Rastermikroskop kann im Vergleich zum konventionellen Rastermikroskop durch die interferometrische Beleuchtung eine erhöhte axiale Auflösung erzielt werden.

Durch eine Kombination von STED und doppelkonfokaler Anordnung lässt sich sowohl lateral, als auch axial eine Auflösungssteigerung erreichen.

In einer besonderen Kombination von einer STED- und einer doppelkonfokalen Anordnung, dem STED-4Pi-Mikroskop, wird mit Hilfe einer doppelkonfokalen Anordnung des Stimulationslichtstrahls eine destruktive Interferenz in der Fokusmitte erzeugt. Eine Stimulierte Abregung ist somit auf den axialen Fokusrand beschränkt (Phys. Rev. Lett., vol. 88, p. 163901-1-163901-4, 2002).

Es hat sich gezeigt, dass zur Erzielung eines bestmöglichen Auflösungsvermögens das optische Bauteil vorzugsweise im Strahlengang des Stimulationslichtstrahles sehr exakt positioniert und justiert werden muss. Nachteiligerweise ist aufgrund dieses Umstandes nach jedem Objektivwechsel eine aufwendige Nachjustierung und Anpassung des optischen Bauteils auf die baulichen und optischen Eigenschaften des neuen Objektivs erforderiich.

Aus der DE 10105391 A1 ist ein Rastermikroskop nach dem Oberbegriff des Anspruchs 1 bekannt. Bei diesem Rastermikroskop ist das optische Bauteil, welches die Phase des passierenden Lichts verändert, in einer zur Fokusebene in der Probe konjugierten Fourierebene angeordnet. Somit wird das optische Bauteil in die Fokusebene in der Probe abgebildet. Die WO 98/28646 offenbart ein Rastermikroskop, bei dem eine Beleuchtungslochblende zur Variation des optisch wirksamen Blendendurchmessers mittels einer Variooptik auf die Probe fokussiert wird.

Es ist daher die Aufgabe der vorliegenden Erfindung, ein Rastermikroskop anzugeben, mit dem bei wesentlich reduziertem Justieraufwand der theoretisch mögliche Auflösungsgrad erreichbar ist und das gleichzeitig eine vereinfachte Anpassbarkeit an wechseinde Untersuchungsbedingungen - beispielsweise Objektivwechsel- bietet.

Die Aufgabe wird durch ein Rastermikroskop nach Anspruch 1 gelöst.

Die Erfindung hat den Vorteil, dass zumindest eine Optik vorgesehen ist, die das optische Bauteil in die Pupille des Objektivs abbildet, wobei die Größe des Abbildes des optischen Bauteils einstellbar ist.

Erfindungsgemäß wurde erkannt, dass zur Erzielung einer exakten. Manipulation der Wellenfront des Anregungslichtstrahls bzw. des Stimulationslichtstrahls das optische Bauteil in der Pupille des Objektive oder In einer dazu konjugierten Ebene angeordnet sein muss. Vorzugsweise wirkt das optische Bauteil ausschließlich auf den Stimulationslichtstrahl und nicht auf den Anregungslichtstrahl. Da der Stimulationslichtstrahl und der Anregungslichtstrahl in der Regel vor dem Objektiv, beispielsweise durch einen dichroitischen Strahlteller vereinigt werden, ist das optische Bauteil vorzugsweise vor dem Strahlvereiniger im Strahlengang des Stimulationslichtstrahls angeordnet.

Als optisches Bauteil ist beispielsweise eine Verzögerungsplatte, die als Phasenverzögerungsplatte ausgeführt ist, verwendbar. In der Praxis weisen Phasenverzögerungsplatten aufgrund von Fertigungstoleranzen Abweichungen von der geometrischen Idealform auf. Beispielsweise werden die Radien einer λ/2-Platte, wie sie in der bereits erwähnten Veröffentlichung (Proc. Natl. Acad. Sci. U.S.A., Vol. 97, p. 8206-8210, 2000) verwendet werden, nicht mit den nominellen Radien übereinstimmen. Um dennoch die gewünschte Wellenfront in der Pupille zu erreichen, wird erfindungsgemäß die Größe des Abbildes des optischen Bauteils in der Pupille angepasst.

In einer bevorzugten Ausgestaltungsform weist die Optik, die das optische Bauteil in die Pupille des Objektivs abbildet, verschiebbare Fokussiermittel, wie beispielsweise Linsen oder Hohlspiegel, auf. In einer anderen Variante ist das Bauteil selbst vorzugsweise entlang der optischen Achse verschiebbar angeordnet. In einer besonders bevorzugten Ausgestaltungsform weist die Optik verschiebbare Fokussiermittel auf und das Bauteil selbst kann vorzugsweise entlang der optischen Achse verschiebbar angeordnet sein. Zum Verschieben der Optik bzw. des optischen Bauteils ist vorteilhafterweise ein motorischer Antrieb vorgesehen. Das Verschieben der Fokussiermittel und/oder des optischen Bauteils erfolgt vorzugsweise derart, dass das Abbild des optischen Bauteils stets in der Pupille des Objektivs verbleibt und dass der Anregungslichtstrahl bzw. der Stimulationslichtstrahl das Objektiv als paralleles Lichtbündel beleuchtet.

In einer anderen bevorzugten Variante ist die Optik als vorzugsweise motorisch einstellbare Variooptik ausgebildet. Diese kann einerseits zum Justieren des Systems oder andererseits zur Anpassung der Größe des Abbildes des optischen Bauteils auf verschiedene Pupillendurchmesser, beispielsweise unterschiedlicher Objektive, verwendet werden.

Die Variooptik ist vorzugsweise so ausgestaltet, dass bei einer Veränderung ihrer Brennweite der Brennpunkt, der sich auf dem in die Pupille abzubildenden Bauteils gegenüberliegenden Seite der Variooptik befindet, ortsfest bleibt. In einer ganz bevorzugten Ausgestaltung der Variooptik bleiben bei einer Brennweitenveränderung beide Brennpunkte der Variooptik ortsfest.

Anstelle der bereits erwähnten Möglichkeiten zum Einstellen der Größe des Abbildes des optischen Bauteils kann auch vorgesehen sein, die Optik gegen eine Optik mit anderen optischen Eigenschaften auszutauschen. Hierzu ist vorzugsweise ein als Revolver oder Schiebeschlitten ausgebildetes Vorratsmittel vorgesehen, in dem unterschiedliche Optiken bevorratet sind, die vorzugsweise durch einfaches Drehen bzw. Schieben des Vorratsmittels in den Strahlengang des Anregungs- bzw. Stimulationslichtstrahls eingebracht werden können. Vorzugsweise ist das Vorratsmittel motorisch angetrieben.

In einer ganz besonders bevorzugten Ausführungsvariante erfolgt die Einstellung der Größe des Abbildes des optischen Bauteils automatisch. Vorzugsweise ist ein Mittel zum automatischen Erkennen des in den Strahlengang eingebrachten Objektivs vorgesehen, das es einem Steuerrechner ermöglicht, die für dieses Objektiv optimale, gegebenenfalls vorgespeicherte Einstellung vorzunehmen. Vorzugsweise erfolgt die Einstellung der Größe des Abbildes des optischen Bauteils in Abhängigkeit vom Durchmesser der Pupille des gewählten Objektivs.

In einer ganz besonders bevorzugten Ausgestaltungsvariante ist das Rastermikroskop als konfokales oder als doppelkonfokales Rastermikroskop ausgebildet.

Die Pupillenebene ist eine Fourierebene zur Fokusebene des Objektivs und in einer bevorzugten Variante erzeugt die Optik eine weitere Fourierebene, in der das optische Bauteil angeordnet ist.

In der Zeichnung ist der Erfindungsgegenstand schematisch dargestellt und wird anhand der Figuren nachfolgend beschrieben. Dabei zeigen:
- Fig. 1: ein erfindungsgemäßes Rastermikroskop,
- Fig. 2: eine schematische Darstellung der Abbildung des optischen Bauteils in die Pupille des Objektivs,

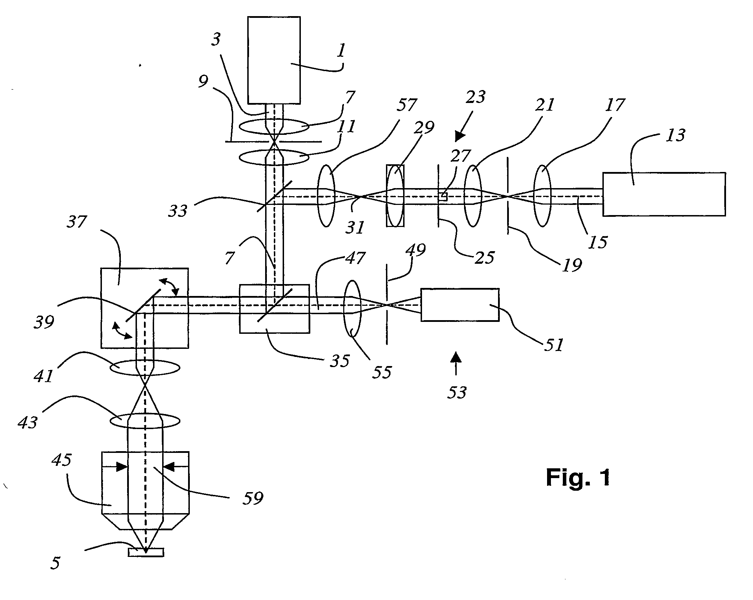

Fig. 1 zeigt ein erfindungsgemäßes Rastermikroskop, das als konfokales Rastermikroskop ausgebildet ist. Das Rastermikroskop beinhaltet eine erste Lichtquelle 1, die einen Anregungslichtstrahl 3 zum optischen Anregen eines ersten Probenbereichs einer Probe 5 emittiert. Der Anregungslichtstrahl 3 wird mit der Optik 7 auf die Beleuchtungslochblende 9 fokussiert, passiert diese und wird anschließend von der weiteren Optik 11 kollimiert. Das Rastermikroskop umfasst eine weitere Lichtquelle 13, die einen Stimulationslichtstrahl 15 erzeugt, der mit der Linse 17 auf die Stimulationslochblende 19 fokussiert wird. Der durch die Stimulationslochblende 19 tretende Stimulationslichtstrahl 15 wird von der weiteren Linse 21 kollimiert und durchläuft anschließend ein optisches Bauteil 23 zur Beeinflussung der Form des Fokus des Stimulationslichtstrahls 15. Das optische Bauteil 23 besteht aus einem Substrat 25, auf das eine PhasenverzögerungsPlatte 27, die als λ/2- Platte ausgestaltet ist und die einen kleineren Durchmesser als den Durchmesser des Stimulationslichtstrahls 15 aufweist, angebracht ist. Eine Variooptik 29 fokussiert den durch das optische Bauteil 23 tretende Stimulationslichtstrahl 15 zu einem Fokus 31. Die Variooptik 29 ist so ausgestaltet, dass der Ort des Fokus 31 konstant bleibt, so dass gegebenenfalls nur das optische Bauteil nachjustiert werden muss. Die Variooptik 29 ist bei diesem Rastermikroskop derart ausgebildet, dass die Lage ihrer vorderen Brennebene, in der sich der Fokus 31 befindet, und die Lage der hinteren Brennebene, in der das optische Bauteil angeordnet ist, stets konstant bleiben, um ein Nachjustieren des optischen Bauteils in axialer Richtung zu vermeiden. Der Anregungslichtstrahl 3 und der Stimulationslichtstrahl 15 werden mit Hilfe eines dichroitischen Strahlteilers 33 vereinigt und über den Hauptstrahlteiler 35 zu einer Strahlablenkeinrichtung 37, die einen kardanisch aufgehängten Scanspiegel 39 beinhaltet, gelenkt. Die Strahlablenkeinrichtung 37 führt den Anregungslichtstrahl 3 und den Stimulationslichtstrahl 15 gemeinsam durch die Scanoptik 41, die Tubusoptik 43 und durch das Objektiv 45 über bzw. durch die Probe. Im Probenbereich überlappen die Fokusse des Anregungslichtstrahls und des Stimulationslichtstrahls zur Erzielung des STED-Effektes teilweise. Das von der Probe ausgehende Detektionslicht 47 gelangt durch das Objektiv 45, die Tubusoptik 43, die Scanoptik 41 und über die Strahlablenkeinrichtung 37 zurück zum Hauptstrahlteiler 35, passiert diesen und trifft nach Passieren der Detektionslochblende 49 auf den als Photomultiplier 51 ausgebildeten Detektor 53. Zum Fokussieren des Detektionslichts 47 auf die Detektionslochblende 49 ist eine Fokussier-Optik 55 vorgesehen. Die zwischen dem optischen Bauteil 23 und und dem Fokus 31 angeordnete Variooptik 29 und die zwischen dem Fokus 31 und dem dichroitischen Strahlteiler 33 angeordnete Linse 57 bilden gemeinsam mit der Scanoptik 41 und der Tubus-Optik 43 eine Optik, die das optische Bauteil 23 in die Pupille 59 des Objektivs 45 abbildet. Mit Hilfe der Variooptik 29 kann die Größe des Abbildes des optischen Bauteils eingestellt werden. Dem Fachmann ist hierbei klar, dass im Normalbetrieb des Rastermikroskops in der Pupille 59 des Objektivs 45 kein reales sichtbares Abbild des optischen Bauteils existiert.

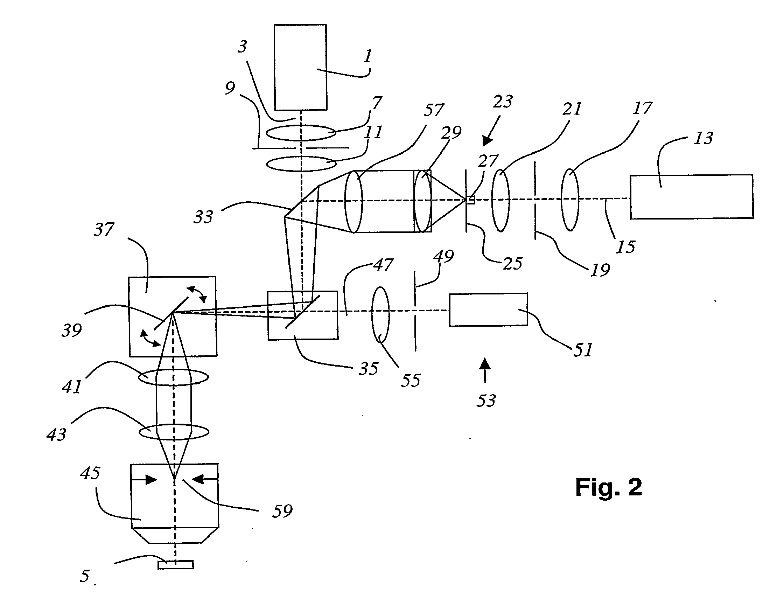

Fig. 2 illustriert, wie die aus der Variooptik 29 der Linse 57, der Scanoptik 41 und der Tubus-Optik 43 gebildete Optik das optische Bauteil in die Pupille des Objektivs abbildet. Hierbei handelt es sich um eine schematische Illustration eines Strahlenganges (durchgezogene Linien), der im Normalbetrieb des Rastermikroskops nicht vorhanden ist. Vielmehr handelt es sich um einen Fourier-Strahlengang, wie er beispielsweise auch zur Illustration der Köhler'schen Beleuchtung fachüblicherweise eingezeichnet wird.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Lichtquelle
- 3: Anregungslichtstrahl
- 5: Probe
- 7: Optik
- 9: Beleuchtungslochblende
- 11: weitere Optik
- 13: weitere Lichtquelle
- 15: Stimulationslichtstrahl
- 17: Linse
- 19: Stimulationslochblende
- 21: Linse
- 23: optisches Bauteil
- 25: Substrat
- 27: Phasenverzögerungsplatte
- 29: Variooptik
- 31: Fokus
- 33: Strahlteilers
- 35: Hauptstrahlteiler
- 37: Strahlablenkeinrichtung
- 39: Scanspiegel
- 41: Scanoptik
- 43: Tubusoptik
- 45: Objektiv
- 47: Detektionslicht
- 49: Detektionslochblende
- 51: Photomultiplier
- 53: Detektor
- 55: Fokussieroptik
- 57: Linse
- 59: Pupille

## Patentansprüche

1. Rastermikroskop mit einer Lichtquelle (1) zur Bereitstellung eines Anregungslichtstrahls (3) zum optischen Anregen eines ersten Probenbereichs und mit einer Lichtquelle (13) zur Bereitstellung eines Stimulationslichtstrahls (15) zum Auslösen einer stimulierten Emission oder einer weiteren Anregung in einem weiteren, zumindest teilweise mit dem ersten Probenbereich überlappenden Probenbereich, sowie mit zumindest einem Objektiv (45) zum Fokussieren des Anregungslichtstrahls (3) und des Stimulationslichtstrahls (15) und mit einem optischen Bauteil (23), welches die Phase des das optische Bauteil passierenden Lichts des Anregungslichtstrahls (3) und/oder des Stimulationslichtstrahls (15) verändert und somit die Form des Fokus des Anregungslichtstrahls (3) und/oder des Stimulationslichtstrahls (15) beeinflusst,
**dadurch gekennzeichnet, dass** zumindest eine Optik (29) zum Abbilden des optischen Bauteils (23) in die Pupille (59) des Objektivs (45) vorgesehen ist, dass die Optik (29) eine Variooptik (29) umfasst, dass die Größe des Abbildes des optischen Bauteils (23) mit Hilfe der Optik (29) einstellbar ist, wobei die Einstellung der Größe des Abbildes des optischen Bauteils (23) in Abhängigkeit vom Durchmesser der Pupille des gewählten Objektivs (45) erfolgt, und dass entweder die Variooptik (29) so ausgebildet ist, dass bei einer Veränderung ihrer Brennweite beide Brennpunkte der Variooptik ortsfest bleiben oder das optische Bauteil (23) entlang der optischen Achse der Optik (29) verschiebbar angeordnet ist.

2. Rastermikroskop nach Anspruch 1, **dadurch gekennzeichnet, dass** die Optik (29) verschiebbare Fokussiermittel umfasst.

3. Rastermikroskop nach Anspruch 1 oder 2, **dadurch gekennzeichnet, dass** die Optik (29) und/oder das optische Bauteil (23) motorisch verschiebbar sind.

4. Rastermikroskop nach einem der Ansprüche 1 bis 3, **dadurch gekennzeichnet, dass** die Variooptik (29) motorisch einstellbar ist.

5. Rastermikroskop nach einem der Ansprüche 1 bis 4, **dadurch gekennzeichnet, dass** das optische Bauteil (23) eine Phasenverzögerungsplatte umfasst.

6. Rastermikroskop nach Anspruch 5, **dadurch gekennzeichnet, dass** die Phasenverzögerungsplatte eine λ/2-Platte ist.

7. Rastermikroskop nach Anspruch 6, **dadurch gekennzeichnet, dass** die Phasenverzögerungsplatte lokal in verschiedenen Bereichen unterschiedliche Phasenverzögerungen bewirkt.

8. Rastermikroskop nach einem der Ansprüche 1 bis 7, **dadurch gekennzeichnet, dass** das optische Bauteil (23) ausschließlich auf den Stimulationslichtstrahl wirkt.

9. Rastermikroskop nach einem der Ansprüche 1 bis 8, **dadurch gekennzeichnet, dass** das Rastermikroskop ein konfokales Rastermikroskop oder ein doppelkonfokales Rastermikroskop ist.

## Claims

1. A scanning microscope comprising a light source (1) for providing an excitation beam (3) for optically exciting a first specimen region and comprising a light source (13) for providing a stimulation beam (15) for provoking a stimulated emission or a further excitation in a further specimen region, at least partially overlapping with the first specimen region, as well as comprising at least one objective (45) for focusing the excitation beam (3) and the stimulation beam (15) and comprising an optical component (23), which changes the phase of the light passing the optical component of the excitation beam (3) and/or the stimulation beam (15) and thus influences the shape of the focus of the excitation beam (3) and/or the stimulation beam (15),
**characterized in that** at least one optical system (29) is provided for imaging the optical component (23) into the pupil (59) of the objective (45), that the optical system (29) comprises a zoom (29), that the size of the image of the optical component (23) is adjustable by means of the optical system (29), wherein the adjustment of the size of the image of the optical component (23) is carried out in dependence on the diameter of the pupil of the selected objective (45), and that either the zoom (29) is formed such that when changing its focal length both focal points of the zoom remain stationary or the optical component (23) is slidably arranged along the optical axis of the optical system (29).

2. The scanning microscope according to claim 1, **characterized in that** the optical system (29) comprises slidable focusing means.

3. The scanning microscope according to claim 1 or 2, **characterized in that** the optical system (29) and/or the optical component (23) are motor-slidable.

4. The scanning microscope according to one of the claims 1 to 3, **characterized in that** the zoom (29) is motor-adjustable.

5. The scanning microscope according to one of the claims 1 to 4, **characterized in that** the optical component (23) comprises a phase delay plate.

6. The scanning microscope according to claim 5, **characterized in that** the phase delay plate is a λ/2 plate.

7. The scanning microscope according to claim 6, **characterized in that** the phase delay plate causes locally in different regions different phase delays.

8. The scanning microscope according to one of the claims 1 to 7, **characterized in that** the optical component (23) exclusively acts on the stimulation beam.

9. The scanning microscope according to one of the claims 1 to 8, **characterized in that** the scanning microscope is a confocal scanning microscope or a double-confocal scanning microscope.

## Revendications

1. Microscope à balayage pourvu d'une source de lumière (1) permettant de fournir un faisceau lumineux d'excitation (3) servant à exciter optiquement une première zone d'échantillon, et d'une source de lumière (13) permettant de fournir un faisceau lumineux de stimulation (15) servant à déclencher une émission stimulée ou une autre excitation dans une autre zone d'échantillon recouvrant au moins en partie la première zone d'échantillon, et d'au moins un objectif (45) servant à focaliser le faisceau lumineux d'excitation (3) et le faisceau lumineux de stimulation (15), ainsi que d'un composant optique (23), lequel modifie la phase de la lumière, passant par le composant optique, du faisceau lumineux d'excitation (3) et/ou du faisceau lumineux de stimulation (15) et influe donc sur la forme du foyer du faisceau lumineux d'excitation (3) et/ou du faisceau lumineux de stimulation (15),
**caractérisé en ce qu'**au moins une optique (29) sert à représenter le composant optique (23) dans la pupille (59) de l'objectif (45), **en ce que** l'optique (29) présente un objectif à focale variable (29), **en ce que** la taille de la représentation du composant optique (23) est réglable à l'aide de l'optique (29), le réglage de la taille de la représentation du composant optique (23) étant mis en oeuvre en fonction du diamètre de la pupille de l'objectif (45) sélectionné, et **en ce que** soit l'objectif à focale variable (29) est réalisé de telle manière que, lors d'une variation de sa distance focale, les deux foyers de l'objectif à focale variable restent fixes, soit le composant optique (23) est monté mobile le long de l'axe optique de l'optique (29).

2. Microscope à balayage selon la revendication 1, **caractérisé en ce que** l'optique (29) comprend des moyens de focalisation mobiles.

3. Microscope à balayage selon la revendication 1 ou 2, **caractérisé en ce que** l'optique (29) et/ou le composant optique (23) peuvent être déplacés de façon motorisée.

4. Microscope à balayage selon l'une quelconque des revendications 1 à 3, **caractérisé en ce que** l'objectif à focale variable (29) est réglable de façon motorisée.

5. Microscope à balayage selon l'une quelconque des revendications 1 à 4, **caractérisé en ce que** le composant optique (23) comprend une plaque de retard de phase.

6. Microscope à balayage selon la revendication 5, **caractérisé en ce que** la plaque de retard de phase est une plaque λ/2.

7. Microscope à balayage selon la revendication 6, **caractérisé en ce que** la plaque de retard de phase met localement en oeuvre différents retards de phase dans différentes zones.

8. Microscope à balayage selon l'une quelconque des revendications 1 à 7, **caractérisé en ce que** le composant optique (23) agit exclusivement sur le faisceau lumineux de stimulation.

9. Microscope à balayage selon l'une quelconque des revendications 1 à 8, **caractérisé en ce que** le microscope à balayage est un microscope à balayage à foyer commun ou un microscope à balayage à double foyer commun.
